(19) Europäisches Patentamt / European Patent Office / Office européen des brevets

(11) **EP 4 502 610 A1**

(12) **EUROPEAN PATENT APPLICATION**
published in accordance with Art. 153(4) EPC

(43) Date of publication:
**05.02.2025 Bulletin 2025/06**

(21) Application number: **23776813.0**

(22) Date of filing: **27.01.2023**

(51) International Patent Classification (IPC):
**G01N 35/00** $^{(2006.01)}$    **G01N 21/78** $^{(2006.01)}$

(52) Cooperative Patent Classification (CPC):
**G01N 21/78; G01N 35/00**

(86) International application number:
**PCT/JP2023/002594**

(87) International publication number:
**WO 2023/188765 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022  JP 2022055705**

(71) Applicant: **HITACHI HIGH-TECH CORPORATION Tokyo 105-6409 (JP)**

(72) Inventor: **KARO Hikaru Tokyo 105-6409 (JP)**

(74) Representative: **Strehl Schübel-Hopf & Partner Maximilianstrasse 54 80538 München (DE)**

(54) **DATA PROCESSING SYSTEM AND METHOD FOR AUTOMATIC ANALYZER**

(57)    Provided is a data processing system for an automatic analyzer, the data processing system being capable of suppressing periodic noise, which has been superimposed on a measured waveform, by using a reasonable CPU and reasonable memory performance. To this end, the data processing system of the automatic analyzer according to the present invention comprises a mechanism that, as preprocessing, analyzes the frequency and phase of periodic noise included in a measured waveform, and that, when the periodic noise is integrated from the frequency and phase information determined from the preprocessing, carries out an integration processing operation by using, as a start position, a time at which the intensity of noise is low.

[FIG. 5]

**EP 4 502 610 A1**

**Description**

Technical Field

The present invention relates to a data processing technique of an automatic analyzer including a measurement mechanism of a test piece.

Background Art

As a background art of the present technical field, there is a known method of removing noise having a random property superimposed on a measuring signal by measuring a test piece for a certain time and performing integrating processing or averaging processing on acquired data as a method of reducing noise having a random property superimposed on measurement data of a test piece.

In addition, as a method of reducing noise having periodicity superimposed on measurement data of a test piece, the abstract of the following PTL 1 discloses that "To be surely capable of removing periodic noise superimposed on a measuring signal without delaying the measuring signal.", and that "A first noise frequency detecting unit 1 performs an FFT process on a measuring signal, and detects a frequency of a periodic noise signal as first detection frequency. A noise signal analyzing unit 5 obtains a mutual correlation function between the first detection frequency and the measuring signal, and calculates, based on the mutual correlation function, an amplitude and a phase of the periodic noise signal superimposed on the measuring signal posterior to a point of time when the mutual correlation function is obtained. A cancel signal preparing unit 7 prepares a cancel signal from the first detection frequency, the amplitude, and the phase related to the periodic noise signal. A signal cancel unit 3 calculates the measuring signal and the cancel signal, and cancels the periodic noise signal."

Further, the abstract of the following PTL 2 discloses that "Provided is a data collection system for a mass spectrometer capable of removing systematic noise and obtaining a high-quality mass spectrum without increasing a size of a memory device of the data collection system and without incorporating a strong CPU in the data collection system.", and that "In the data collection system for a mass spectrometer that collects data output from the mass spectrometer and performs data processing, noise of a predetermined period is acquired, and the noise is repeatedly subtracted from the data, thereby removing noise having periodicity from the data."

Citation List

Patent Literature

PTL 1: JP2002-171183A
PTL 2: JP2000-299083A

Summary of Invention

Technical Problem

In the above-described technique, there is a demand to prevent the random noise and the periodic noise with a more reasonable configuration of an arithmetic unit and a storage device. The invention has been made in view of the above circumstances, and an object of the invention is to provide a data processing system and method for an automatic analyzer that prevent periodic noise superimposed on a measured waveform without enlarging a CPU and memory performance.

Solution to Problem

In order to solve the above problems, the invention provides a data processing system of an automatic analyzer that obtains measurement data by a measurement mechanism of a test piece, in which an integration start position is determined based on a period and phase information of periodic noise, and the periodic noise is prevented by integrating or averaging the measurement data based on the determined integration start position.

Further, in order to solve the above problems, the invention provides a data processing method of an automatic analyzer that obtains measurement data by a measurement mechanism of a test piece, and the data processing method includes: determining an integration start position based on a period and phase information of periodic noise, and preventing the periodic noise by integrating or averaging the measurement data based on the determined integration start position.

Advantageous Effects of Invention

According to the invention, it is possible to prevent periodic noise superimposed on a measured waveform without enlarging a CPU and memory performance.

Brief Description of Drawings

[FIG. 1] FIG. 1 is a diagram showing a schematic configuration of an automatic analyzer according to Embodiment 1.
[FIG. 2] FIG. 2 is a diagram showing a reaction container and waveforms of transmitted light according to Embodiment 1.
[FIG. 3] FIG. 3 is a diagram showing an example of transmitted light where periodic noise is superimposed and a reaction liquid start position signal according to Embodiment 1.
[FIG. 4] FIG. 4 is a diagram showing another example of the transmitted light where the periodic noise is superimposed and the reaction liquid start position signal according to Embodiment 1.
[FIG. 5] FIG. 5 is a diagram showing an example of the transmitted light where the periodic noise is superimposed, the reaction liquid start position signal, and periodic noise synchronization timings according to Embodiment 1.
[FIG. 6] FIG. 6 is a diagram showing another example of the transmitted light where the periodic noise is superimposed, the reaction liquid start position signal, and the periodic noise synchronization timings according to Embodiment 1.

Description of Embodiments

Hereinafter, a preferred embodiment will be described by taking, as an example, an automatic analyzer that performs a qualitative and quantitative analysis by irradiating a reaction liquid obtained by causing a reaction between a biological sample such as blood or urine and a reagent with light and measuring the light transmitted through the reaction liquid with a detector.

Embodiment 1

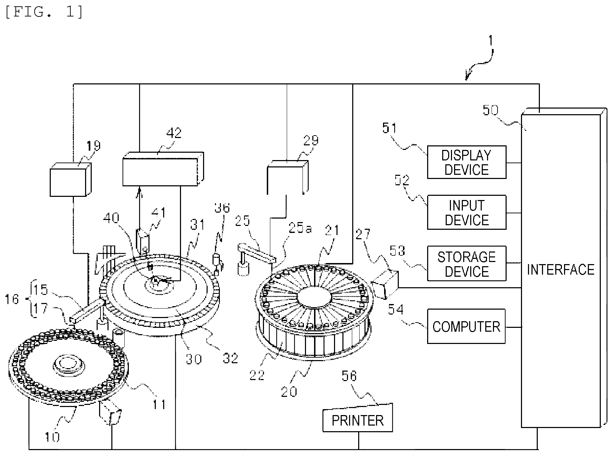

First, an outline of an automatic analyzer according to Embodiment 1 of the invention shown in FIG. 1 will be described. In FIG. 1, an automatic analyzer 1 mainly includes a sample disk 10, a reagent disk 20, a reaction disk 30, a light transmitting unit 40, a light receiving unit 41, a light signal collection unit 42, and a computer 54.

The reaction disk 30 is formed in a substantially circular plate shape, and a plurality of (for example, about 100 to 200) reaction containers 31 are disposed in a peripheral portion of an upper surface of the reaction disk 30. The reaction container 31 is formed of a light transmissive material in a substantially rectangular box shape. The reaction container 31 is maintained at a predetermined temperature (for example, 37 °C) by a thermostatic bath 32.

A large number of specimen containers 11 that accommodate biological samples such as blood and urine are placed on the sample disk 10 in a double manner along a circumferential direction in the shown example. Further, a sample aliquoting mechanism 16 is disposed near the sample disk 10. This sample aliquoting mechanism 16 includes a movable arm 15, and a pipette nozzle 17 attached to the movable arm 15.

With the above configuration, in the sample aliquoting mechanism 16, when aliquoting a sample, the pipette nozzle 17 moves to a aliquoting position by the movable arm 15 to aspiration a predetermined amount of sample from the specimen container 11 positioned at a aspiration position of the sample disk 10, and discharges the sample into the certain reaction container 31 at a discharging position on the reaction disk 30.

A reagent refrigerator 22 formed in a substantially cylindrical shape is disposed in the reagent disk 20. In this reagent refrigerator 22, a plurality of reagent bottles 21 are disposed along a circumferential direction of the reagent disk 20. A label (not shown) indicating reagent identification information such as a barcode is attached to each reagent bottle 21.

Each reagent bottle 21 accommodates a reagent liquid corresponding to an analysis item that can be analyzed by the automatic analyzer 1. In addition, a barcode reading device 27 is disposed close to the reagent disk 20. The barcode reading device 27 reads the barcode displayed on an outer wall of each reagent bottle 21 at the time of reagent registration. The read reagent information is registered in a storage device 53 together with a position on the reagent disk 20.

In addition, a reagent aliquoting mechanism 25 having substantially the same mechanism as the sample aliquoting mechanism 16 is disposed near the reagent disk 20. At the time of reagent aliquoting, the reagent disk 20 disposes the reagent bottle 21 corresponding to a test item near the reagent aliquoting mechanism 25. The reaction disk 30 disposes the corresponding reaction container 31 near the reagent aliquoting mechanism 25. Then, the reagent aliquoting mechanism 25 aspirates the reagent liquid from the reagent bottle 21 by a pipette nozzle 25a, and discharges the reagent liquid to the reaction container 31.

A stirring mechanism 36 is disposed at a position surrounded by the reaction disk 30, the reagent disk 20, and the reagent aliquoting mechanism 25. The reaction liquid (test piece) of the sample and the reagent accommodated in the reaction container 31 is stirred by this stirring mechanism 36 to promote the reaction. The light transmitting unit 40 is disposed near a center portion of the reaction disk 30, and the light receiving unit 41 is disposed on an outer peripheral side of the reaction disk 30. A row of the reaction container 31 where the stirring is completed rotationally moves so as to pass through a photometry position sandwiched between the light transmitting unit 40 and the light receiving unit 41.

The reaction disk 30 is intermittently driven at every, for example, 45° rotation angle, and rotates once in 18 seconds. The reaction liquid of the sample and the reagent in each reaction container 31 is irradiated with light by the light transmitting unit 40 every time the reaction liquid crosses the photometry position during the rotation operation of the reaction disk 30. A period where one reaction container 31 crosses the photometry position is, for example, about 10 msec to 30 msec. The transmitted light attenuated according to an absorbance of the reaction liquid is incident on the light receiving unit 41 facing the reaction liquid. The light receiving unit 41 separates the received light for each wavelength and supplies a photocurrent signal corresponding to an intensity for each wavelength to the light signal collection unit 42.

Next, a control system and a signal processing system in the automatic analyzer 1 in FIG. 1 will be briefly described. The computer 54 is connected to a sample aliquoting control unit 19, a reagent aliquoting control unit 29, and the light signal collection unit 42 via an interface 50. The computer 54 sends a command to the sample aliquoting control unit 19 to control the aliquoting operation of the sample. In addition, the computer 54 sends a command to the reagent aliquoting control unit 29 to control the aliquoting operation of the reagent.

The light signal collection unit 42 converts a measurement signal into numerical data, and supplies the numerical data to the computer 54 via the interface 50. A printer 56 for printing, a storage device 53 as a storage device, an external output medium (not shown), an input device 52 for inputting an operation command and the like, and a display device 51 for displaying a screen are connected to the interface 50.

The storage device 53 includes, for example, a hard disk memory or an external memory (not shown). The storage device 53 stores information such as passwords of the operators, display levels of the screens, analysis parameters, analysis item request contents, calibration results, and analysis results.

Next, analysis operations of the sample in the automatic analyzer 1 in FIG. 1 will be described. The analysis parameters related to items that can be analyzed by the automatic analyzer 1 are input in advance via the input device 52 such as a keyboard and stored in the storage device 53. The operator selects the test item requested for each sample using an operation function screen of the display device 51.

At this time, information such as a patient ID is also received from the input device 52. In order to analyze the instructed test item for each sample, the pipette nozzle 17 of the sample aliquoting mechanism 16 aliquots a predetermined amount of the sample from the specimen container 11 to the reaction container 31 according to the analysis parameter.

The reaction container 31 where the sample is aliquoted is transferred by the rotation of the reaction disk 30, and stops at a reagent receiving position near the reagent aliquoting mechanism 25. The pipette nozzle 25a of the reagent aliquoting mechanism 25 aliquots a predetermined amount of the reagent liquid into the reaction container 31 according to the analysis parameter of the corresponding test item. A aliquoting order of the sample and the reagent may be opposite to this example, and the reagent may be aliquoted earlier than the sample.

Thereafter, the sample and the reagent are stirred by the stirring mechanism 36 such that the sample and the reagent are mixed. When this reaction container 31 crosses the photometry position, the transmitted light of the reaction liquid is measured by the light receiving unit 41. The measured transmitted light is converted into the numerical data corresponding to an amount of the light by a signal processing circuit, and is taken into the computer 54 via the interface 50.

Using the converted numerical values, concentration data is calculated based on a calibration curve measured in advance by an analysis method specified for each test item. Component concentration data as the analysis result of each test item is output to a screen of the printer 56 or the display device 51. Before the above measurement operation is performed, the operator sets various parameters necessary for analysis measurement and registers the test piece via an operation screen of the display device 51. Further, the operator confirms the analysis result after the measurement through the operation screen on the display device 51.

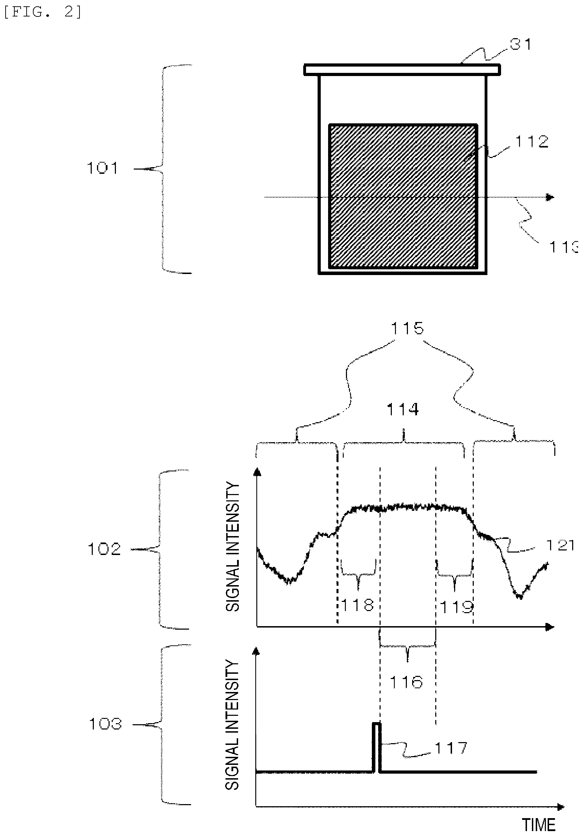

FIG. 2 relates to Embodiment 1, and shows waveforms when a change in the amount of the light of the reaction liquid in the reaction container 31 is measured by the light transmitting unit 40 and the light receiving unit 41.

FIG. 2 shows a cross-sectional view 101 of the reaction container in a rotation direction, a waveform 102 of the light signal collection unit, and a waveform 103 of a reaction liquid start position. The waveform 102 of the light signal collection unit is measured by scanning 113 of a light axis of the transmitted light. The reaction container 31 contains a reaction liquid 112.

The waveform 102 of the light signal collection unit includes a reaction liquid section waveform 114 and section waveforms 115 of a place other than the reaction liquid including clearance between a wall surface of the reaction container and the adjacent reaction container.

Although not shown in FIG. 2, a reaction liquid start position detection unit is provided as a unit for detecting a position of the reaction liquid 112, and it is possible to measure only a portion where the reaction liquid is present while detecting the position of the reaction liquid 112 by this detection unit.

The waveform 103 of the reaction liquid start position indicates a signal issued from the reaction liquid start position detection unit. Here, in order to eliminate an influence of rapid transmitted light transition of the wall portion of the reaction container, an issuance timing of a trigger signal 117 of the waveform 103 of the reaction liquid start position is set by providing a margin 118 and a margin 119 from the wall portion of the reaction container.

With respect to the issuance timing of the trigger signal 117 of the waveform 103 of the reaction liquid start position, the margin 118 with a front wall portion of the reaction container is defined as $t_{fm}$, and the margin 119 with a rear wall portion of the reaction container is defined as $t_{bm}$.

In the waveform 102 of the light signal collection unit, a signal 121 including random noise due to disturbance is observed. Based on the trigger signal 117 of the waveform 103 of the reaction liquid start position, the random noise can be reduced by performing integration processing or averaging processing in a certain integration section 116 in accordance with a timing of a section where the reaction liquid is present.

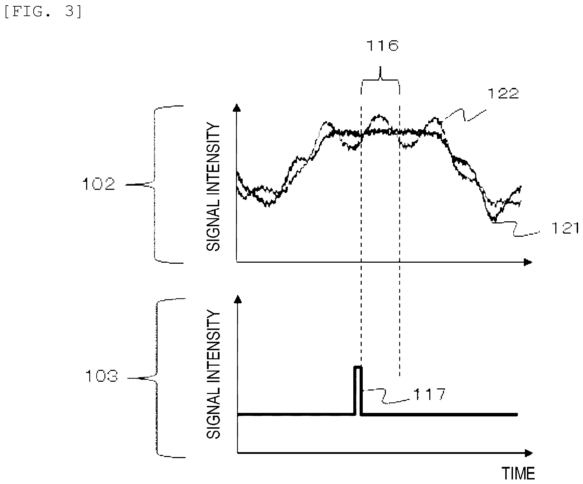

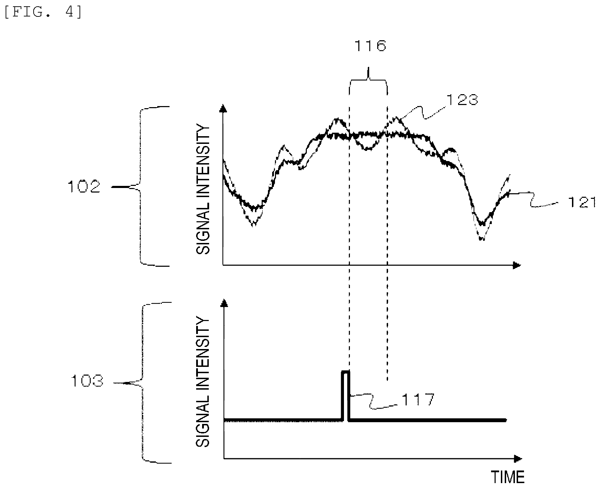

FIGS. 3 and 4 relate to Embodiment 1, and show a case where periodic noise is superimposed on the waveform 102 of the light signal collection unit due to the influence of the disturbance. A fact that the periodic noise cannot be prevented by the integration processing or the averaging processing will be described with reference to FIGS. 3 and 4.

FIG. 3 shows a signal 122 where the periodic noise is superimposed on the signal 121 including the random noise.

In the case of FIG. 3, when the integration processing or the averaging processing is performed in the integration section 116 based on the trigger signal 117 of the waveform 103 of the reaction liquid start position, since a positive half period of the periodic noise is taken, a value larger than an original measurement value of the reaction liquid 112 is output.

FIG. 4 shows a signal 123 where the periodic noise is superimposed on the signal 121 including the random noise. The signal 123 where the periodic noise is superimposed has the same period as compared with the signal 122 where the periodic noise is superimposed in FIG. 3, but a phase of the period is shifted by 180 degrees.

In the case of FIG. 4, when the integration processing or the averaging processing is performed in the integration section 116 based on the trigger signal 117 of the waveform 103 of the reaction liquid start position, since a negative half period of the periodic noise is taken, a value smaller than the original measurement value of the reaction liquid 112 is output.

Since the signal 122 and the signal 123 where the periodic noise is superimposed in this manner have different phases even when the period is the same, a difference occurs in the results of the integration processing or the averaging processing, which leads to deterioration in accuracy.

Next, a method for preventing the periodic noise in Embodiment 1 will be described.

First, as preprocessing, a waveform related to the periodic noise is acquired in advance, and a frequency and phase analysis is performed to acquire a frequency and phase information of the periodic noise.

A periodic noise synchronization timing $t_{sync}$ is defined as Formula (1) from the frequency and the phase information obtained in advance.

[Math. 1]

$$t_{sync} = n \cdot t_{cycle} + t_{cycle} \cdot \frac{t_{phase}}{2\pi} + \frac{t_{average}}{2} \cdots (1)$$

In Formula (1), $t_{cycle}$ is a period of the periodic noise and is an inverse number of the frequency of the periodic noise. In addition, $t_{phase}$ is a phase of the periodic noise, $t_{average}$ is a time of the integration processing or the averaging processing corresponding to the integration section 116, and n is any integer.

When the integration processing or the averaging processing is performed on the acquired signal 122 or the acquired signal 123 where the periodic noise is superimposed, the periodic noise synchronization timing $t_{sync}$ provides a start position of the integration processing or the averaging processing such that a result becomes constant.

$t_{sync}$ at which a difference from the time $t_{trig}$ at which the trigger signal 117 of the waveform 103 of the reaction liquid start position is issued is minimized is obtained, and this $t_{sync}$ is set as a start position candidate $t_{sync1}$ of the integration processing or the averaging processing.

In this state, since there is a possibility that $t_{sync1}$ indicates a position where the reaction container 31 is not present, $t_{sync1}$ satisfying Formula (2) is determined as the start position of the integration processing or the averaging processing by using the times $t_{fm}$ and $t_{bm}$ up to the margin 118 and the margin 119 with respect to the wall portion of the reaction container shown in FIG. 2.
[Math. 2]

$$t_{trig} - t_{fm} < t_{sync1} < t_{trig} + t_{bm} - t_{average} \cdots (2)$$

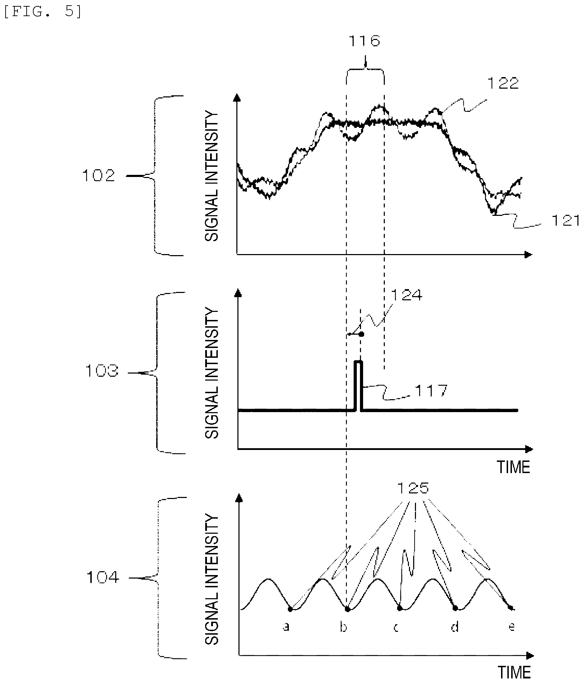

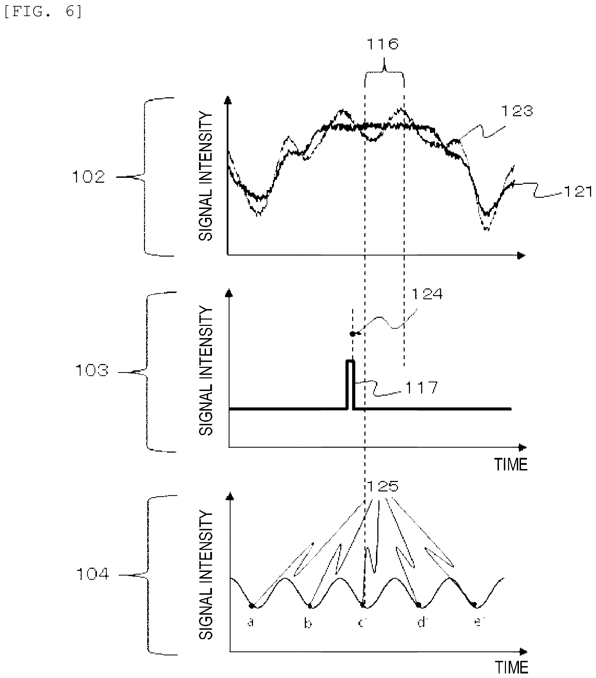

FIGS. 5 and 6 relate to Embodiment 1. FIG. 5 and FIG. 3, and FIG. 6 and FIG. 4 respectively show cases where the same periodic noise is superimposed. A fact that the periodic noise can be prevented by the integration processing or the averaging processing will be described with reference to FIGS. 5 and 6.

FIGS. 5 and 6 show synchronization timing positions 125 that visualize the periodic noise synchronization timing $t_{sync}$ in accordance with a waveform 104 where the periodic noise is superimposed.

In the case of FIG. 5, the integration processing or the averaging processing is performed in the integration section 116 based on a synchronization timing position 125b closest to a timing of the trigger signal 117 of the waveform 103 of the reaction liquid start position. Since an amplitude of the periodic noise in the integration section 116 is positive-negative symmetric with respect to the measurement value of the reaction liquid 112, the periodic noise included in the result of the integration processing or the averaging processing is removed.

In the case of FIG. 6, the integration processing or the averaging processing is performed in the integration section 116 based on a synchronization timing position 125c' closest to the timing of the trigger signal 117 of the waveform 103 of the reaction liquid start position. Since the amplitude of the periodic noise in the integration section 116 is positive-negative symmetric with respect to the measurement value of the reaction liquid 112, the periodic noise included in the result of the integration processing or the averaging processing is removed.

One embodiment of the invention has been described above. According to the invention, in order to remove the random noise and the periodic noise, it is sufficient to have a configuration including a small amount of memory for storing the frequency and the phase information of the periodic noise and a small scale arithmetic unit for only executing the calculation of the periodic noise synchronization timing and conditional branching of the determination of the start position of the processing.

In the preferred embodiment, the automatic analyzer is exemplified where the reaction liquid obtained by causing a reaction between the biological sample and the reagent is irradiated with light and the light transmitted through the reaction liquid is measured with the detector, but the invention is not limited to this embodiment, and can be applied to an automatic analyzer that performs measurement in which a timing of data collection and a timing of noise having periodicity are different.

Reference Signs List

1: automatic analyzer
10: sample disk
11: specimen container
15: movable arm
16: sample aliquoting mechanism
17: pipette nozzle
19: sample aliquoting control unit
20: reagent disk
21: reagent bottle
22: reagent refrigerator
25: reagent aliquoting mechanism
25a: pipette nozzle
27: barcode reading device
29: reagent aliquoting control unit
30: reaction disk
31: reaction container
32: thermostatic bath
36: stirring mechanism
40: light transmitting unit
41: light receiving unit
42: light signal collection unit
50: interface

51: display device
52: input device
53: storage device
54: computer
56: printer
101: cross-section view in rotation direction
102: waveform of light signal collection unit
103: waveform at start position of reaction liquid
112: reaction liquid
113: scanning of light axis
114: reaction liquid section waveform
115: section waveform of place other than reaction liquid
116: integration section
117: trigger signal
118: margin with front wall portion of reaction container
119: margin with rear wall portion of reaction container
121: signal including random noise
122: signal where periodic noise is superimposed
123: signal where periodic noise is superimposed
125: periodic noise synchronization timing position

**Claims**

1. A data processing system of an automatic analyzer that obtains measurement data by a measurement mechanism of a test piece, wherein
an integration start position is determined based on a period and phase information of periodic noise, and the periodic noise is prevented by integrating or averaging the measurement data based on the determined integration start position.

2. The data processing system of an automatic analyzer according to claim 1, wherein
the measurement data is analyzed to acquire the period and the phase information of the periodic noise.

3. The data processing system of an automatic analyzer according to claim 1 or 2, wherein
the integration start position is a position allowing the periodic noise to be reduced when integrating or averaging the periodic noise.

4. The data processing system of an automatic analyzer according to claim 1 or 2, wherein
a time for performing the integration or the averaging is set at a position where the periodic noise is reduced in order to reduce noise having a random property included in the measurement data.

5. A data processing method of an automatic analyzer that obtains measurement data by a measurement mechanism of a test piece, the method comprising:
determining an integration start position based on a period and phase information of periodic noise, and preventing the periodic noise by integrating or averaging the measurement data based on the determined integration start position.

6. The data processing method of an automatic analyzer according to claim 5, wherein
the measurement data is analyzed to acquire the period and the phase information of the periodic noise.

7. The data processing method of an automatic analyzer according to claim 5 or 6, wherein
the integration start position is a position allowing the periodic noise to be reduced when integrating or averaging the periodic noise.

8. The data processing method of an automatic analyzer according to claim 5 or 6, wherein
a time for performing the integration or the averaging is set at a position where the periodic noise is reduced in order to reduce noise having a random property included in the measurement data.

[FIG. 1]

[FIG. 2]

[FIG. 3]

[FIG. 4]

[FIG. 5]

[FIG. 6]

## INTERNATIONAL SEARCH REPORT

| International application No. |
|---|
| **PCT/JP2023/002594** |

### A. CLASSIFICATION OF SUBJECT MATTER

***G01N 35/00***(2006.01)i; ***G01N 21/78***(2006.01)i
FI: G01N35/00 A; G01N21/78 A; G01N35/00 F

According to International Patent Classification (IPC) or to both national classification and IPC

### B. FIELDS SEARCHED

Minimum documentation searched (classification system followed by classification symbols)

G01N35/00; G01N21/78

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2002-257868 A (HIOKI ELECTRIC WORKS) 11 September 2002 (2002-09-11) paragraphs [0035]-[0045] | 1, 3, 5, 7 |
| Y | paragraphs [0035]-[0045] | 2, 4, 6, 8 |
| Y | JP 2014-137350 A (HITACHI HIGH-TECHNOLOGIES CORPORATION) 28 July 2014 (2014-07-28) paragraphs [0031], [0043] | 2, 6 |
| Y | JP 2008-278332 A (CANON KABUSHIKI KAISHA) 13 November 2008 (2008-11-13) paragraph [0066] | 4, 8 |
| Y | WO 2013/121831 A1 (HITACHI, LTD.) 22 August 2013 (2013-08-22) paragraph [0057] | 4, 8 |
| A | JP 2009-192458 A (PANASONIC CORPORATION) 27 August 2009 (2009-08-27) entire text, all drawings | - |
| A | JP 3-118423 A (YAMATO SCALE CO., LTD.) 21 May 1991 (1991-05-21) entire text, all drawings | - |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 February 2023** | **28 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

14

# EP 4 502 610 A1

**INTERNATIONAL SEARCH REPORT**
**Information on patent family members**

International application No.

**PCT/JP2023/002594**

| Patent document cited in search report | | | Publication date (day/month/year) | Patent family member(s) | | | Publication date (day/month/year) |
|---|---|---|---|---|---|---|---|
| JP | 2002-257868 | A | 11 September 2002 | (Family: none) | | | |
| JP | 2014-137350 | A | 28 July 2014 | (Family: none) | | | |
| JP | 2008-278332 | A | 13 November 2008 | (Family: none) | | | |
| WO | 2013/121831 | A1 | 22 August 2013 | US 2015/0012249 A1 paragraph [0072] | | | |
| JP | 2009-192458 | A | 27 August 2009 | US 2010/0206069 A1 entire text, all drawings<br>WO 2009/063603 A1 entire text, all drawings<br>EP 2192690 A1 entire text, all drawings<br>CN 101842987 A entire text, all drawings | | | |
| JP | 3-118423 | A | 21 May 1991 | (Family: none) | | | |

Form PCT/ISA/210 (patent family annex) (January 2015)

**15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002171183 A
- JP 2000299083 A